# EUROPEAN PATENT SPECIFICATION

(11) **EP 4 497 950 B1**
(45) Date of publication and mention of the grant of the patent: **28.10.2026**
(21) Application number: 24186662.3
(22) Date of filing: 04.07.2024
(51) Int. Cl.: F04D 15/00, G01F 1/34

(54) **METHOD FOR ESTIMATING THE OUTPUT FLOW RATE OF A PUMP**
VERFAHREN ZUR SCHÄTZUNG DES AUSTRITTSDURCHFLUSSES EINER PUMPE
PROCÉDÉ D'ESTIMATION DU DÉBIT DE SORTIE D'UNE POMPE

(30) Priority: 27.07.2023 EP 23306305
(43) Date of publication of application: 29.01.2025
(73) Proprietor: Schneider Toshiba Inverter Europe SAS, 27120 Pacy-sur-Eure (FR)
(72) Inventor: EJJABRAOUI, Kamal, 27930 GRAVIGNY (FR); INEZA, Albin, 78440 GARGENVILLE (FR)
(74) Representative: Plasseraud IP

(56) References cited:
- EP-B1- 2 726 827
- JP-A- 2019 020 191
- US-A1- 2012 247 200

## Description

### Technical Field

This disclosure pertains to the field of pump systems where a pump, in particular a centrifugal pump, pumps a fluid from an upstream pipe to a downstream pipe.

### Background Art

Pump systems are used in various hydraulic applications. Such systems transport different kinds of fluid with different properties and densities e.g., from clean water to wastewater applications. During their operation, the different mechanical parts such as impeller, blades, wear-ring, diffuser, that compose the pump are subject to wear, and they can wear differently depending on the wear causes, e.g., cavitation, corrosion, abrasion, abnormal usage...; The degradation of those parts generates internal losses and decreases the performance of the centrifugal pump. The losses can be quantified in terms of loss of flow rate and loss of total dynamic head capacity of the pump.

In certain cases, one pressure sensor located at the output of the pump is present and no flow meters are used since a flow meter is much more expensive than a pressure sensor. Without a flow rate sensor, it is difficult to monitor the system operation and drift in pump characteristics without having the flow rate information.

The estimation of the flow rate downwards from the pump may however be done by using pump curves provided by the pump manufacturer, i.e., power vs. flow rate and a measured or estimated power which allows to deduce the flow rate by extrapolating from the configured pump curve at the corresponding pump speed. This method is however not very accurate.

Document EP2726827B1 proposes a method using the generation of a transient fluid wave using a generator and two pressures at two locations on a pipe to calculate a wave speed of the fluid. Such method needing injection of a transient fluid wave and a generator is not a passive method and cannot be used in any working condition, transient or steady state of a pump without additional device and condition.

### Summary

The present disclosure improves the situation in proposing a new passive method to obtain a measurement of the flow rate of a pump.
More precisely, the present disclosure proposes a method for estimating the output flow rate provided by a pump in any working condition, transient or steady state, of said pump in a system comprising said pump, an upstream pipe and a downstream pipe, by using pressure information coming from a first downstream pressure sensor placed on the downstream pipe at a first distance from the pump and a second downstream pressure sensor placed on the downstream pipe at a second distance from the pump such that a known distance L separates said first and second pressure sensors, said method comprising estimating said output flow rate *Q̂* with an iterative process using the downstream pipe characteristics, the distance between the first and the second sensors the pressures sensed with said pressure sensors and a flow rate estimator model E1 defined by the equations: $\left\{\begin{matrix}\hat{Q} = {K}_{p} ⋅ \left(Δ{P}_{measured}-\hat{Δ P}\right) + {\hat{Q}}_{I} \left(1\right) \\ \frac{d {\hat{Q}}_{I}}{dt} = {K}_{i} ⋅ \left(Δ{P}_{measured}-\hat{Δ P}\right) \left(2\right)\end{matrix}\right.$ and equations : $\hat{Δ P} = \frac{\left(\hat{F}⋅L⋅{v}^{2}⋅ρ\right)}{2 ⋅ D}$ (3) and $v = \frac{\hat{Q}}{A}$ (4) Where *Q̂* is the Estimated flow rate (m³/h), $\hat{Δ P}$ is the Estimated differential pressure (bar), Δ*P_{measured}* is the Measured differential pressure (bar), *F̂* is the Estimated friction losses coefficient, *L* is the Pipe length between said first and second pressure sensors, D is the Pipe diameter, v is the Fluid flow velocity (m/s) and A is the section of the pipe (m²), *ρ* is the Fluid density (kg/m3), Kₚ is the Proportional gain of the flow estimator, ${K}_{i} = \frac{{K}_{p}}{{T}_{iq}}$ in which *T_{iq}* is the Integrator time constant (s) in the flow estimator.

In the present disclosure, thanks to the additional downstream pressure sensor at a defined distance from the first downstream pressure sensor which itself is located remote from the pump, the flow in the system may be estimated with an estimator model, or observatory, by knowing two downstream pressure information and the pipe characteristics for identification of the flow rate in a defined pipe section.
In a first embodiment, the friction loss coefficient *F̂* may be a fixed constant.
In an improved realization mode, the friction loss coefficient *F̂* may be calculated based on a friction loss coefficient estimator model E2 defined by the equations: $\left\{\begin{matrix}\hat{F} = {K}_{1} ⋅ \left(1-\hat{X}\right) + {\hat{F}}_{I} \left(5\right) \\ \frac{d {\hat{F}}_{I}}{dt} = {K}_{2} ⋅ \left(1-\hat{X}\right) \left(6\right) \\ \hat{X} = - 2 ⋅ \sqrt{\hat{F}} ⋅ log \left(\frac{2.51}{{R}_{e} ⋅ \sqrt{\hat{F}}}+\frac{nu}{3.71 \times D}\right) \left(7\right)\end{matrix}\right.$ ${K}_{1} = 1 ; {K}_{2} = \frac{{K}_{1}}{{T}_{i}} = \frac{{K}_{1}}{{T}_{\frac{iq}{2}}}$ (8)
In which *F̂* is a dimensionless coefficient, K₁ is a dimensionless proportional gain, K₂ unit is *s*⁻¹ and where: ${R}_{e} = \frac{ρ ⋅ v ⋅ D}{μ}$ (9)
when the Reynolds coefficient *Rₑ* of the flow in the downstream pipe is greater or equal than 2300;
The method may also comprise a friction loss coefficient *F̂* calculation where $\hat{F} = \frac{64}{{R}_{e}}$ (10)
when the Reynolds coefficient *Rₑ* of the flow in the downstream pipe is smaller than 2300.
The method may comprise measuring a pump speed and power information coming from a command unit of said pump to compare the estimated output flow rate and the flow rate calculated with the pump curves of the pump to detect wear of the pump.
The pump may be a centrifugal pump.
The present disclosure proposes further a computer program comprising instructions to implement the method according to any one of the preceding claims when the software is executed by a processor.

The present disclosure proposes also a computer-readable non-transient recording medium on which the computer program is registered to implement the method when such computer program is executed by a processor.

### Brief Description of Drawings

Other features, details and advantages will be shown in the following detailed description and on the figures, on which:
Figure 1 is a schematic drawing of a pump and piping with pressure sensors and flow meter;
Figures 2A and 2B are respectively a Head versus flow rate curve and a Power versus flow rate curve of pump datasheets;
Figure 3 is a schematic view of a pump and piping with additional downstream pressure sensor;
Figure 4 is a schematic view of a flow rate estimation process;
Figure 5 is a schematic view of a friction loss estimation process.

### Description of Embodiments

In the present disclosure the following notations are used in the equations hereunder:

| | |
|---|---|
| Hₚᵤₘₚ | Pump Total dynamic head (m) |
| Qₚᵤₘₚ | Pump flow rate (m3/h) |
| Pwₚᵤₘₚ | Pump mechanical power (kW) |
| *ω* | Pump mechanical speed (rpm) |
| *ωₙ* | Pump nominal mechanical speed (rpm) |
| Q_{system} | System flow rate (m3/h) |
| *Q* | Flow rate (m3/h) |
| *Q* | Estimated flow rate (m3/h) |
| $\hat{Δ P}$ | Estimated differential pressure (bar) |
| Δ*P_{measured}* | Measured differential pressure (bar) |
| *F̂* | Estimated friction losses coefficient |
| *L* | Pipe length (m) |
| D | Pipe diameter (m) |
| *v* | Fluid flow velocity (m/s) |
| *ρ* | Fluid density (kg/m3) |
| *Rₑ* | Reynolds coefficient |
| *µ* | Dynamic viscosity kg/(m.s) |
| *nu* | Pipe rugosity (m) |
| *T_{iq}* | Integrator time constant (s) of flow estimator |
| *Tᵢ* | Integrator time constant (s) of friction loss estimator |
| Kₚ | Proportional gain of flow estimator |
| A | section of the pipe |

The unit of $\hat{Δ P}$ is kg·²·m⁻¹·s⁻².

The unit of *Q̂_{I}* and *Q̂* is m³·s⁻¹

The unit of Kₚ is then m⁴·s·kg⁻¹

In such system, $v = \frac{Q}{A}$ where A is the section of the pipe and Q is the flow rate passing inside the pipe.

Pumping stations usually do not have flow meters to give the information of the flow rate outcoming from the pumps of such pumping stations because globally flow meters are complex to install depending on the pumping station and are more expensive than pressure sensors which are less complex to install on the pipes of such stations. Except the use of the power and manufacturer datasheet, there is no known method in the literature that allow to provide an accurate value of the flow rate outside the pump without using an external flow rate sensor. In addition, the use of the power and manufacturer datasheet gives only the flow rate inside the pump which is generally higher due to internal recirculation in the pump.

Traditionally, when using an upstream pressure sensor, a downstream pressure sensor to calculate the pump head, the pump Head vs. flow rate characteristic of the pump datasheet and the measured inlet and outlet pressure, the flow rate may be deduced from the pump curves provided by the manufacturer at the corresponding pump speed. This is translated with mathematical equations as follows:

The pump characteristics are identified by the following equations: ${H}_{pump} = {x}^{2} ⋅ F \left({Q}_{pump}, x\right)$ ${Pw}_{pump} = {x}^{3} ⋅ G \left({Q}_{pump}, x\right)$ Where: *Hₚᵤₘₚ* is the head of the pump, *Qₚᵤₘₚ* is the pump flow rate, $x = \frac{ω}{{ω}_{n}}$ where *ω* is the pump mechanical speed (rpm), *ωₙ* the pump nominal mechanical speed (rpm) as in the list above and F and G are interpolation functions.

To identify the pump flow rate, the functions "F" and "G" need to be inversed.

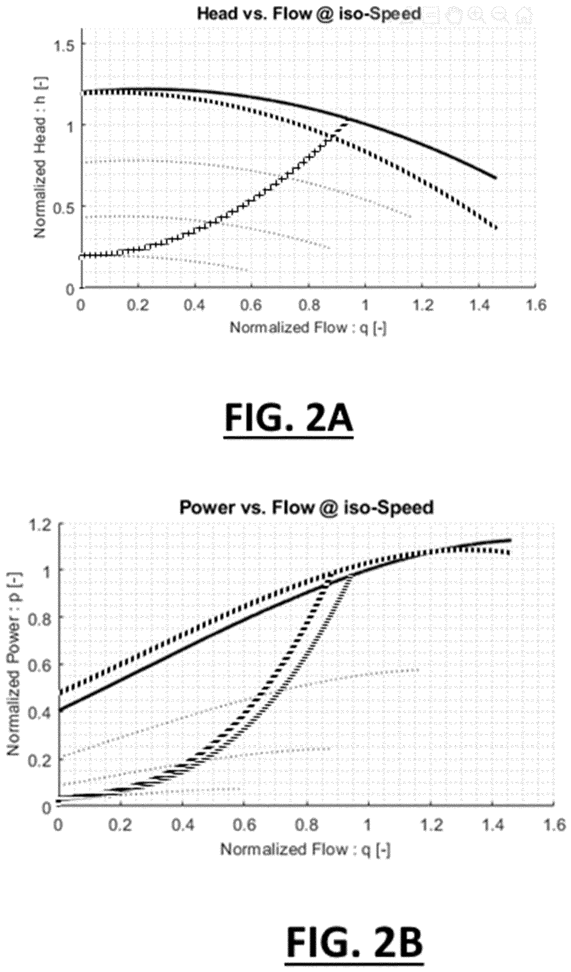

When using the pump characteristics "Head vs. Flow rate", as in figure 2A the equation is: ${Q}_{pump} = x ⋅ {F}^{- 1} \left({H}_{pump}, {x}^{2}\right)$

When using the pump characteristics "Power vs. Flow rate" as in figure 2B the equation is: ${Q}_{pump} = x ⋅ {G}^{- 1} \left({Pw}_{pump}, {x}^{2}\right)$

In practice, the pump flow rate inside the pump is higher than the system flow rate that would be measured outside the pump due to the internal recirculation inside the pump: ${Q}_{system} = {Q}_{pump} - \partial Q \left(ω, {Q}_{pump}\right)$

Due to the pump ageing, the pump characteristics change, and do not provide a correct information of the flow rate downstream the pump.

The present disclosure proposes a solution to identify the flow rate outcoming from the pump which is different from the flow rate inside the pump due to internal recirculation. The invention consists of the identification of the pump outcoming flow rate without using a flow sensor but by using an additional pressure sensor information and known pipe characteristics.

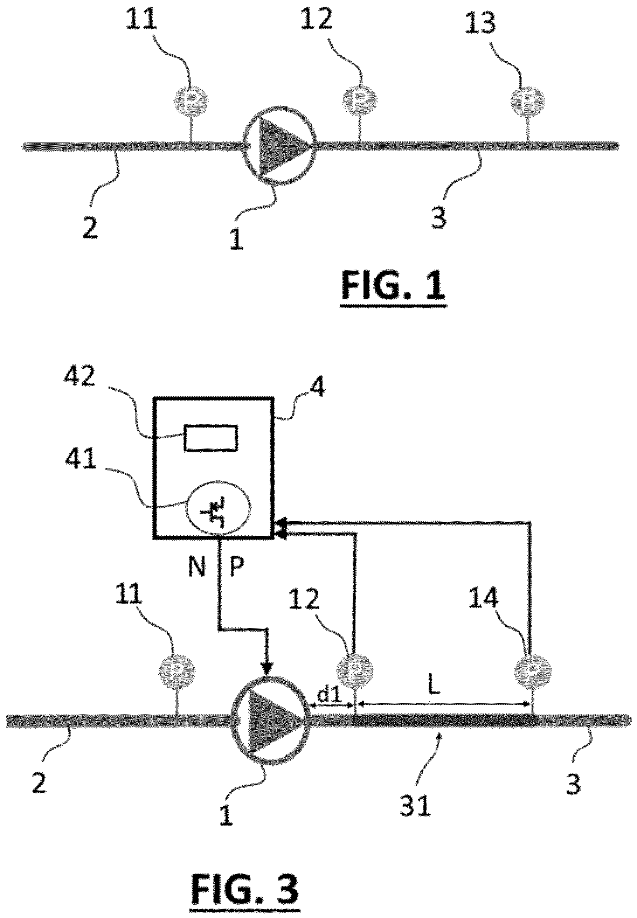

Figure 3 provides a schematic drawing of a present disclosure example using two pressure sensors 12, 14 placed at well-known distances d2 and d1+d2 on a downstream pipe and measuring a first pressure P1 at distance d2 from the pump and a second pressure P2 at distance d1+d2 from the pump to estimate the flow rate that pass through this pipe by estimating the pressure losses and comparing such to the measured differential pressure on this pipe.

The principle is to use an estimator of the flow rate passing through the section of the pipe between the two-pressure sensors using the following estimator model E1: E1: $\left\{\begin{matrix}\hat{Q} = {K}_{p} ⋅ \left(Δ{P}_{measured}-\hat{Δ P}\right) + {\hat{Q}}_{I} \left(1\right) \\ \frac{d {\hat{Q}}_{I}}{dt} = {K}_{i} ⋅ \left(Δ{P}_{measured}-\hat{Δ P}\right) \left(2\right)\end{matrix}\right.$ and equations : $\hat{Δ P} = \frac{\left(\hat{F}⋅L⋅{v}^{2}⋅ρ\right)}{2 ⋅ D}$ (3) and $v = \frac{\hat{Q}}{A}$ (4) where *Q̂* is the Estimated flow rate (m³/h), $\hat{Δ P}$ is the Estimated differential pressure (bar), Δ*P_{measured}* is the Measured differential pressure (bar), *F̂* is the Estimated friction losses coefficient , *L* is the Pipe length between said first and second pressure sensors, D is the Pipe diameter, v is the Fluid flow velocity (m/s) and A is the section of the pipe (m²), ρ is the Fluid density (kg/m3), Kₚ is the Proportional gain of the flow estimator, ${K}_{i} = \frac{{K}_{p}}{{T}_{iq}}$ in which T_{iq} is the Integrator time constant (s) in the flow estimator, the unit of ΔP and $\hat{ΔP}$ is kg. m⁻¹ . s⁻², the unit of Q et Q̂_{I} is m³. s⁻¹, the unit of Kₚ is m⁴. s. kg⁻¹, the unit of Kᵢ is m⁴. kg⁻¹.

*Kₚ* and ${K}_{i} = \frac{{K}_{p}}{{T}_{iq}}$ are configured depending on the identification of the characteristics of the system and the estimator model E1 is programmed in a computerized system having a processor programmed to execute iterative calculations based on the estimator to determine the estimated flow rate Q.

The present disclosure principle is to use the pressures at two separate points downstream from the pump and the pipe characteristics to build an observer and estimator model permitting to estimate the fluid flow without any action on the pump or artifice such as transient in fluid flow or pressure. The estimated fluid flow is introduced in the ΔP calculation in order to obtain a convergence towards the fluid flow such as ΔP = ΔP̂.

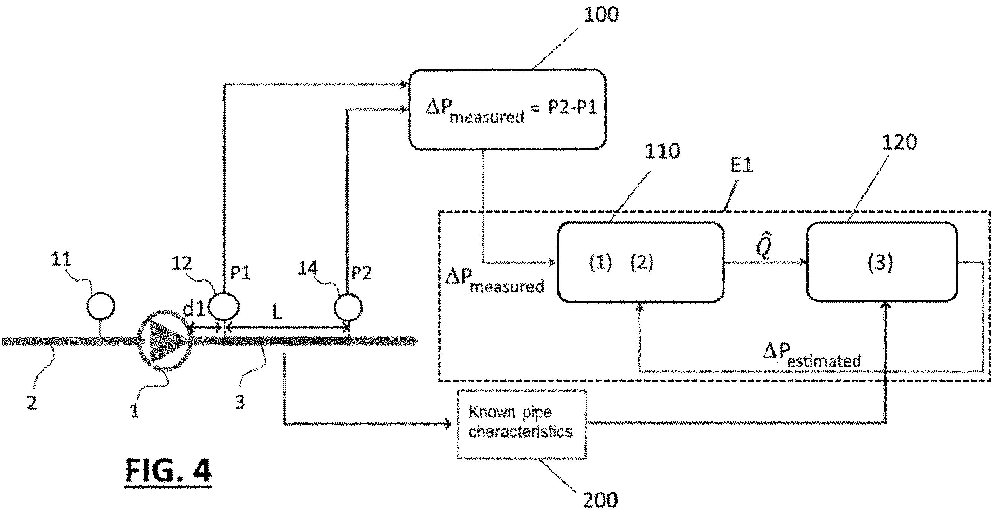

As shown in figure 4, to implement the estimator, a first step 100 comprises a calculation of Δ*P_{measured}* as P2-P1, calculation of equations (1), (2) with an initial Δ*P_{estimated}* value then calculation of equation (3) with known pipe characteristics 200 and equation (4) to obtain a new Δ*P_{estimated}.* The calculations are then reiterated to obtain convergence on an estimated flow rate *Q̂*.

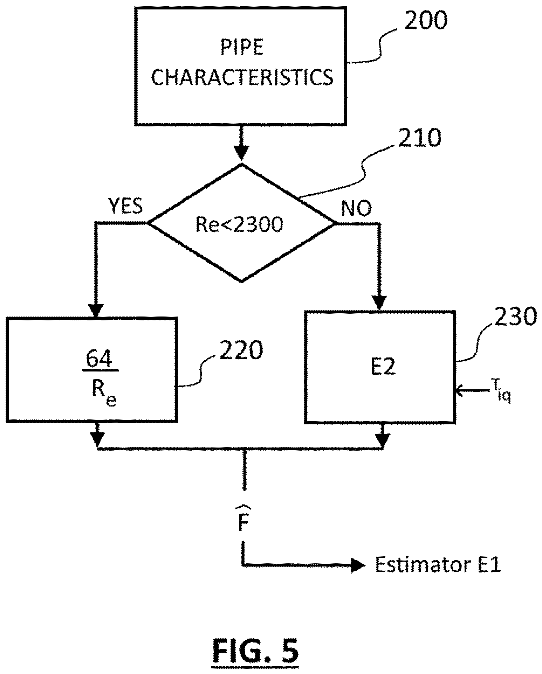

In this model *F̂* may be a fixed value but to provide a more accurate estimation, *F̂* is made dependent of the Reynolds coefficient *Rₑ* of the flow in the downstream pipe and calculated in another algorithm as depicted in figure 5. In such case, after entry of the pipe characteristics 200 and a test 210 on the value of *Rₑ* the calculation of *F̂* becomes:

If *Rₑ* ≥ 2300 at step 230 the calculation of *F̂* is done with a second estimator model E2 hereunder: E2: $\begin{matrix}\left\{\begin{matrix}\hat{F} = {K}_{1} ⋅ \left(1-\hat{X}\right) + {\hat{F}}_{I} \left(5\right) \\ \frac{d {\hat{F}}_{I}}{dt} = {K}_{2} ⋅ \left(1-\hat{X}\right) \left(6\right) \\ \hat{X} = - 2 ⋅ \sqrt{\hat{F}} ⋅ log \left(\frac{2.51}{{R}_{e} ⋅ \sqrt{\hat{F}}}+\frac{nu}{3.71 \times D}\right) \left(7\right)\end{matrix}\right. \\ {K}_{1} = 1 ; {K}_{2} = \frac{{K}_{1}}{{T}_{i}} = \frac{{K}_{1}}{{T}_{\frac{iq}{2}}} \left(8\right)\end{matrix}$

In which F̂ is a dimensionless coefficient, K₁ is a dimensionless proportional gain, K₂ unit is s⁻¹ and where: ${R}_{e} = \frac{ρ ⋅ v ⋅ D}{μ}$ (9)

Else if Rₑ < 2300 at step 220, $\hat{F} = \frac{64}{{R}_{e}}$ (10)

In this second estimator, Ti_{q} the integrator time constant is chosen to have a greater dynamic than the physical pump system time constant and Ti, the integral time constant of the second estimator, is chosen smaller than Ti_{q} , e.g. Ti_{q}/2 .

The calculated estimated friction losses coefficient *F̂* is then entered in the first estimator E1.

Tiq integrator time constant (s) for the flow estimator, Kp proportional gain for the flow estimator and the needed pipe characteristics and fluid characteristics: *L*: Pipe length (m); D: Pipe diameter (m); *v*: Fluid flow velocity (m/s); *ρ*: Fluid density (kg/m3); *Rₑ*: Reynolds coefficient; *µ*: Dynamic viscosity kg/(m.s); *nu*: Pipe rugosity (m) are stored in a memory of the computerized system.

The computerized system may be an electronic control unit with a microcontroller having analog to digital conversion means and receiving the pressures P1 and P2 as inputs and comprising a program provided with the estimators algorithms and data storage for the needed constants or may be part of a command unit 4 as shown in figure 3 such as a variable speed drive for the pump such command unit comprising the power control 41 for the pump motor and a processor system 42 to implement the drive command software and the above process software.

In this regard, the process may comprise obtaining the pump speed N and power P information coming from the variable speed drive of the pump to compare the estimated output flow rate and the flow rate calculated with the pump curves of the pump to detect wear of the pump.

The method is particularly suitable if the pump is a centrifugal pump.

### Industrial Applicability

The present disclosure avoids the use of a flow meter which is more expensive than a pressure sensor and more complicated to install on an existing station. The solution will provide the information of the flow given by the centrifugal pump in the system by using only the information of the two-pressure sensors installed on the upstream pipe and downstream pipes. the benefit of the solution is huge because it simplifies the installation and provide the information of flow by pump for different applications.

The present disclosure permits to realize a monitoring of the pump flow rate and to realize a flow rate regulation process of the pump. It allows to provide protection against abnormal behavior of the pump and , in combination with monitoring of the electrical power supplied to the pump, it allows to provide monitoring of the wear of the pump which can be used for predictive maintenance.

The invention is not limited to the description above and may be used in a remote survey system or a local fault detection program, the scope of the invention being solely defined by the appended claims.

## Claims

1. - Method for estimating the output flow rate provided by a pump (1) in any working condition, transient or steady state, of said pump in a system comprising said pump, an upstream pipe (2) and a downstream pipe (3), by using pressure information coming from a first downstream pressure sensor (12) placed on the downstream pipe (3) at a first distance (d1) from the pump (1) and a second downstream pressure sensor (14) placed on the downstream pipe (3) at a second distance (d1 + *L*) from the pump (1) such that a known distance *L* separates said first and second pressure sensors (12, 14), said method comprising estimating said output flow rate *Q̂* with an iterative process using the downstream pipe characteristics, the distance between the first and the second sensors, the pressures sensed with said pressure sensors and a flow rate estimator model E1 defined by the equations: $\left\{\begin{matrix}\hat{Q} = {K}_{p} ⋅ \left(Δ{P}_{measured}-\hat{Δ P}\right) + {\hat{Q}}_{I} \left(1\right) \\ \frac{d {\hat{Q}}_{I}}{dt} = {K}_{i} ⋅ \left(Δ{P}_{measured}-\hat{Δ P}\right) \left(2\right)\end{matrix}\right.$ and equations : $\hat{Δ P} = \frac{\left(\hat{F}⋅L⋅{v}^{2}⋅ρ\right)}{2 ⋅ D}$ (3) and $v = \frac{\hat{Q}}{A}$ (4) Where *Q̂* is the Estimated flow rate (m³/h), $\hat{Δ P}$ is the Estimated differential pressure (bar), Δ*P_{measured}* is the Measured differential pressure (bar), *F̂* is the Estimated friction losses coefficient, *L* is the Pipe length between said first and second pressure sensors, D is the Pipe diameter, v is the Fluid flow velocity (m/s) and A is the section of the pipe (m²), *ρ* is the Fluid density (kg/m3), Kₚ is the Proportional gain of the flow estimator, ${K}_{i} = \frac{{K}_{p}}{{T}_{iq}}$ in which *T_{iq}* is the Integrator time constant (s) in the flow estimator.

2. - Method according to claim 1 wherein the friction loss coefficient *F̂* is a fixed constant.

3. - Method according to claim 1 comprising a friction loss coefficient *F̂* calculation based on a friction loss coefficient estimator model E2 defined by the equations: $\left\{\begin{matrix}\hat{F} = {K}_{1} ⋅ \left(1-\hat{X}\right) + {\hat{F}}_{I} \left(5\right) \\ \frac{d {\hat{F}}_{I}}{dt} = {K}_{2} ⋅ \left(1-\hat{X}\right) \left(6\right) \\ \hat{X} = - 2 ⋅ \sqrt{\hat{F}} ⋅ log \left(\frac{2.51}{{R}_{e} ⋅ \sqrt{\hat{F}}}+\frac{nu}{3.71 \times D}\right) \left(7\right)\end{matrix}\right.$ ${K}_{1} = 1 ; {K}_{2} = \frac{{K}_{1}}{{T}_{i}} = \frac{{K}_{1}}{{T}_{\frac{iq}{2}}}$ (8)
In which *F̂* is a dimensionless coefficient, K₁ is a dimensionless proportional gain, K₂ unit is *s*⁻¹ and where ${R}_{e} = \frac{ρ ⋅ v ⋅ D}{μ}$ (9)
when the Reynolds coefficient *Rₑ* of the flow in the downstream pipe is greater or equal than 2300;

4. - Method according to claim 1 comprising a friction loss coefficient *F̂* calculation where $\hat{F} = \frac{64}{{R}_{e}}$ when the Reynolds coefficient *Rₑ* of the flow in the downstream pipe is smaller than 2300.

5. - Method according to any one of the preceding claims comprising measuring a pump speed (N) and power information (P) coming from a command unit (4) of said pump to compare the estimated output flow rate and the flow rate calculated with the pump curves of the pump to detect wear of the pump.

6. - Method according to any one of the preceding claims wherein said pump is a centrifugal pump.

7. - Computer program comprising instructions to implement the method according to any one of the preceding claims when the software is executed by a processor.

8. - Computer-readable non-transient recording medium on which the computer program of claim 7 is registered to implement the method of any one of claims 1 to 6 when such computer program is executed by a processor.

## Patentansprüche

1. - Verfahren zur Schätzung des Austrittsdurchflusses, der von einer Pumpe (1) bereitgestellt wird, in einem beliebigen Betriebszustand, im Übergangs- oder stationären Zustand, der Pumpe in einem System, das die Pumpe, ein stromaufwärts gelegenes Rohr (2) und ein stromabwärts gelegenes Rohr (3) umfasst, unter Verwendung von Druckinformationen, die von einem ersten stromabwärts gelegen Drucksensor (12), der an dem stromabwärts gelegenen Rohr (3) in einem ersten Abstand (d1) von der Pumpe (1) angeordnet ist, und einem zweiten stromabwärts gelegenen Drucksensor (14) stammen, der an dem stromabwärts gelegenen Rohr (3) in einem zweiten Abstand (d1+ L) von der Pumpe (1) angeordnet ist, so dass ein bekannter Abstand L den ersten und den zweiten Drucksensor (12, 14) trennt, wobei das Verfahren das Schätzen des Austrittsdurchflusses *Q̂* mit einem iterativen Prozess unter Verwendung der Eigenschaften des stromabwärts gelegenen Rohrs, des Abstands zwischen dem ersten und dem zweiten Sensor und den mit den Drucksensoren erfassten Drücken und eines Durchflussschätzermodells E1 umfasst, das durch die Gleichungen definiert ist: $\left\{\begin{matrix}\hat{Q} = {K}_{p} ⋅ \left(Δ{P}_{measured}-Δ\overline{P}\right) + {\hat{Q}}_{i} \left(1\right) \\ \frac{d {\hat{Q}}_{i}}{dt} = {K}_{i} ⋅ \left(Δ{P}_{measured}-Δ\overline{P}\right) \left(2\right)\end{matrix}\right.$ und die Gleichungen: $Δ \overline{P} = \frac{\hat{F} ⋅ L ⋅ {v}^{2} ⋅ ρ}{2 ⋅ D}$ (3) und: $v = \frac{\hat{Q}}{A}$ (4) wobei *Q̂ᵢ* der geschätzte Durchfluss (m³/h) ist, Δ*P̅* der geschätzte Differenzdruck (bar) ist, *ΔP_{measured}* der gemessene Differenzdruck (bar) ist, *F̂* der geschätzte Reibungsverlustkoeffizient ist, L die Rohrlänge zwischen dem ersten und dem zweiten Drucksensor ist, D der Rohrdurchmesser ist, v die Fluidströmungsgeschwindigkeit (m/s) ist und A der Rohrquerschnitt (m²) ist, *ρ* die Fluiddichte (kg/m³) ist, Kₚ die proportionale Verstärkung des Durchflussschätzers ist, ${K}_{i} = \frac{{K}_{p}}{{T}_{iq}}$*,* wobei T_{iq} die Integrator-Zeitkonstante (s) im Durchflussschätzer ist.

2. - Verfahren nach Anspruch 1, wobei der Reibungsverlustkoeffizient *F̂* eine feste Konstante ist.

3. - Verfahren nach Anspruch 1, umfassend eine Berechnung des Reibungsverlustkoeffizienten *F̂* basierend auf einem Reibungsverlustkoeffizienten-Schätzermodell E2, das durch die Gleichungen definiert ist: $\left\{\begin{matrix}\hat{F} = {K}_{1} ⋅ \left(1-\hat{X}\right) + {\hat{F}}_{i} \left(5\right) \\ \frac{d {\hat{F}}_{i}}{dt} = {K}_{2} ⋅ \left(1-\hat{X}\right) \left(6\right) \\ \hat{X} = - 2 ⋅ \sqrt{\hat{F}} ⋅ log \left(\frac{2.51}{{R}_{e} ⋅ \sqrt{\hat{F}}}+\frac{nu}{3.71 ⋅ D}\right) \left(7\right)\end{matrix}\right.$ ${K}_{1} = 1 ; {K}_{2} = \frac{{K}_{1}}{{T}_{i}} = \frac{{K}_{1}}{{T}_{iq} / 2}$ (8)
wobei Fein dimensionsloser Koeffizient ist, K₁ eine dimensionslose proportionale Verstärkung ist, die Einheit von K₂ s⁻¹ ist und wobei ${R}_{e} = \frac{ρ ⋅ v ⋅ D}{μ}$ (9)
wenn der Reynolds-Koeffizient Rₑ der Strömung im stromabwärts gelegenen Rohr größer oder gleich 2300 ist.

4. - Verfahren nach Anspruch 1, umfassend eine Berechnung des Reibungsverlustkoeffizienten *F̂*, wobei: $\hat{F} = \frac{64}{{R}_{e}}$ (10) wenn die Reynolds-Konstante Rₑ der Strömung im stromabwärts gelegenen Rohr kleiner als 2300 ist.

5. - Verfahren nach einem der vorhergehenden Ansprüche, umfassend das Messen einer Pumpendrehzahl (N) und von Leistungsinformationen (P), die von einer Steuereinheit (4) der Pumpe stammen, um den geschätzten Austrittsdurchfluss und den mit den Pumpenkennlinien der Pumpe berechneten Durchfluss zu vergleichen, um einen Verschleiß der Pumpe zu erkennen.

6. - Verfahren nach einem der vorhergehenden Ansprüche, wobei die Pumpe eine Kreiselpumpe ist.

7. - Computerprogramm, umfassend Anweisungen zur Durchführung des Verfahrens nach einem der vorhergehenden Ansprüche, wenn die Software von einem Prozessor ausgeführt wird.

8. - Computerlesbares, nichtflüchtiges Aufzeichnungsmedium, auf dem das Computerprogramm nach Anspruch 7 registriert ist, um das Verfahren nach einem der Ansprüche 1 bis 6 durchzuführen, wenn ein solches Computerprogramm von einem Prozessor ausgeführt wird.

## Revendications

1. - Procédé d'estimation du débit de sortie fourni par une pompe (1) dans n'importe quel état de fonctionnement, transitoire ou permanent, de ladite pompe dans un système comprenant ladite pompe, une conduite amont (2) et une conduite aval (3), en utilisant des informations de pression provenant d'un premier capteur de pression aval (12) placé sur la conduite aval (3) à une première distance (d1) de la pompe (1) et d'un second capteur de pression aval (14) placé sur la conduite aval (3) à une seconde distance (d1+ L) de la pompe (1) de telle sorte qu'une distance connue L sépare lesdits premier et second capteurs de pression (12, 14), ledit procédé comprenant l'estimation dudit débit de sortie *Q̂* par un processus itératif utilisant les caractéristiques de la conduite aval, la distance entre le premier et le second capteur et les pressions détectées avec lesdits capteurs de pression et un modèle d'estimateur de débit E1 défini par les équations : $\left\{\begin{matrix}\hat{Q} = {K}_{p} ⋅ \left(Δ{P}_{measured}-Δ\overline{P}\right) + {\hat{Q}}_{i} \left(1\right) \\ \frac{d {\hat{Q}}_{i}}{dt} = {K}_{i} ⋅ \left(Δ{P}_{measured}-Δ\overline{P}\right) \left(2\right)\end{matrix}\right.$ et les équations : $Δ \overline{P} = \frac{\hat{F} ⋅ L ⋅ {v}^{2} ⋅ ρ}{2 ⋅ D}$ (3) et : $v = \frac{\hat{Q}}{A}$ (4) Où *Q̂ᵢ* est le débit estimé (m³/h), *ΔP̅* est la pression différentielle estimée (bar), Δ*P_{measured}* est la pression différentielle mesurée (bar), *F̂* est le coefficient de pertes de charge par frottement estimé, L est la longueur de conduite entre lesdits premier et second capteurs de pression, D est le diamètre de la conduite, v est la vitesse d'écoulement du fluide (m/s) et A est la section de la conduite (m²), *ρ* est la masse volumique du fluide (kg/m³), Kₚ est le gain proportionnel de l'estimateur de débit, ${K}_{i} = \frac{{K}_{p}}{{T}_{iq}}$ où T_{iq} est la constante de temps d'intégrateur (s) dans l'estimateur de débit.

2. - Procédé selon la revendication 1, dans lequel le coefficient de pertes de charge par frottement *F̂* est une constante fixe.

3. - Procédé selon la revendication 1, comprenant un calcul de coefficient de pertes de charge par frottement *F̂* basé sur un modèle d'estimateur de coefficient de pertes de charge par frottement E2 défini par les équations : $\left\{\begin{matrix}\hat{F} = {K}_{1} ⋅ \left(1-\hat{X}\right) + {\hat{F}}_{i} \left(5\right) \\ \frac{d {\hat{F}}_{i}}{dt} = {K}_{2} ⋅ \left(1-\hat{X}\right) \left(6\right) \\ \hat{X} = - 2 ⋅ \sqrt{\hat{F}} ⋅ log \left(\frac{2.51}{{R}_{e} ⋅ \sqrt{\hat{F}}}+\frac{nu}{3.71 ⋅ D}\right) \left(7\right)\end{matrix}\right.$ ${K}_{1} = 1 ; {K}_{2} = \frac{{K}_{1}}{{T}_{i}} = \frac{{K}_{1}}{{T}_{iq} / 2}$ (8)
Dans lesquelles *F̂* est un coefficient sans dimension, K₁ est un gain proportionnel sans dimension, l'unité de K₂ est s⁻¹ et où : ${R}_{e} = \frac{ρ ⋅ v ⋅ D}{μ}$ (9)
lorsque le coefficient de Reynolds Rₑ de l'écoulement dans la conduite aval est supérieur ou égal à 2300 ;

4. - Procédé selon la revendication 1, comprenant un calcul de coefficient de pertes de charge par frottement *F̂* où : $\hat{F} = \frac{64}{{R}_{e}}$ (10) lorsque le coefficient de Reynolds Rₑ de l'écoulement dans la conduite aval est inférieur à 2300.

5. - Procédé selon l'une quelconque des revendications précédentes, comprenant la mesure d'une vitesse de pompe (N) et d'informations de puissance (P) provenant d'une unité de commande (4) de ladite pompe pour comparer le débit de sortie estimé et le débit calculé avec les courbes de pompe de la pompe afin de détecter l'usure de la pompe.

6. - Procédé selon l'une quelconque des revendications précédentes, dans lequel ladite pompe est une pompe centrifuge.

7. - Programme informatique comprenant des instructions pour mettre en œuvre le procédé selon l'une quelconque des revendications précédentes lorsque le logiciel est exécuté par un processeur.

8. - Support d'enregistrement non transitoire lisible par ordinateur sur lequel est enregistré le programme informatique de la revendication 7 pour mettre en œuvre le procédé de l'une quelconque des revendications 1 à 6 lorsque ce programme informatique est exécuté par un processeur.
